Europäisches Patentamt

European Patent Office

Office européen des brevets

(11) Numéro de publication : **0 379 429 B1**

(12) **FASCICULE DE BREVET EUROPEEN**

(19)

(12)

⑪

(45) Date de publication du fascicule du brevet :
03.06.92 Bulletin 92/23

(21) Numéro de dépôt : **90400132.8**

(22) Date de dépôt : **17.01.90**

�milnt. Cl.⁵ : **B60G 15/07,** B60G 3/26,
F16F 9/32

(54) **Suspension perfectionnée du type "Mac Pherson" et véhicule automobile équipé de cette suspension.**

(30) Priorité : **19.01.89 FR 8900620**

(43) Date de publication de la demande :
**25.07.90 Bulletin 90/30**

(45) Mention de la délivrance du brevet :
**03.06.92 Bulletin 92/23**

(84) Etats contractants désignés :
**DE GB IT**

(56) Documents cités :
**EP-A- 0 174 007
BE-A- 669 207
FR-A- 1 149 962**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Gryz, Gilbert
132, Route de Bondy
F-93600 Aulnay Sous Bois (FR)**

(74) Mandataire : **Durand, Yves Armand Louis et al
CABINET WEINSTEIN 20, Avenue de
Friedland
F-75008 Paris (FR)**

EP 0 379 429 B1

## Description

La présente invention a pour objet des perfectionnements à une suspension du type "Mac Pherson".

Elle vise également un véhicule automobile équipé de tels perfectionnements.

On connait déjà des suspensions du type "Mac Pherson" pour roues de véhicule et comprenant, d'une manière générale, un vérin disposé sensiblement verticalement, ce verin possédant un corps dont la partie inférieure est solidaire de la fusée de roue et une tige dont l'extrémité supérieure est en appui articulé sur la caisse du véhicule, tandis qu'une biellette de direction est reliée de façon articulée au corps du vérin. Une telle suspension, conforme au préambule de la revendication 1, est decrite par exemple dans le document FR-A-1 149 962. Toutefois, dans ce type de suspension, les débattements verticaux de la roue, qui sont dus par exemple au passage sur des obstacles, induisent des variations de braquage de ladite roue qui sont plus ou moins marquées selon la géométrie du train de suspension, et qui provoquent par conséquent des instabilités se répercutant sur la trajectoire du véhicule.

Cet inconvénient est dû au fait que, lorsque la biellette de direction est articulée à la partie supérieure du corps du vérin, il se produit une légère rotation du corps du vérin et donc de la fusée de roue lors du franchissement d'un obstacle par la roue, cette rotation étant due au fait que l'articulation de la biellette sur le corps du vérin se déplace suivant un arc de cercle, alors qu'en même temps le corps du vérin, solidaire de cette articulation, se déplace d'une façon rectiligne parallèlement à son axe qui est celui de la tige du vérin.

Aussi, la présente invention a pour but de remédier à l'inconvénient ci-dessus, c'est-à-dire d'éviter aux roues une variation intempestive de l'angle de braquage lors des débattements verticaux des roues, et cela dans une suspension ou les biellettes de direction sont articulées en position haute sur les vérins.

A cet effet, l'invention a pour objet une suspension perfectionnée comprenant au moins un vérin disposé sensiblement verticalement, ce vérin possédant un corps dont la partie inférieure est solidaire de la fusée de roue et une tige dont l'extrémité supérieure est en appui articulé sur la caisse du véhicule, tandis qu'une biellette de direction est reliée de façon articulée au corps du vérin, caractérisée en ce qu'au moins la partie supérieure de la tige située du côté de son extrémité supérieure articulée sur la caisse du véhicule est cambrée vers l'intérieur de ce véhicule et se situe dans un plan sensiblement parallèle à un plan perpendiculaire à l'axe longitudinal médian du véhicule et contenant ladite biellette de direction.

On comprend déjà que le cambrage de la tige du verin en partie supérieure permettra au corps du vérin d'effectuer, lors du débattement vertical de la roue, une trajectoire en arc de cercle correspondant sensiblement à la trajectoire du point d'articulation de la biellette de direction sur le vérin, de sorte que les variations de l'angle de braquage des roues seront avantageusement évitées.

Suivant une autre caractéristique préférée de cette suspension, la partie cambrée de la tige s'étend à l'extérieur du corps du vérin et éventuellement à l'intérieur d'au moins une partie de ce corps, lorsque la suspension est à l'équilibre.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en élévation schématique et de l'arrière d'une suspension suivant l'art antérieur ;

La figure 2 représente encore la suspension de la figure 1, mais en vue de dessus ;

La figure 3 est une vue en élévation schématique et de l'arrière d'une suspension comprenant les perfectionnements selon cette invention ; et

La figure 4 représente encore la suspension, selon l'invention, de la figure 3, mais en vue en plan et de dessus.

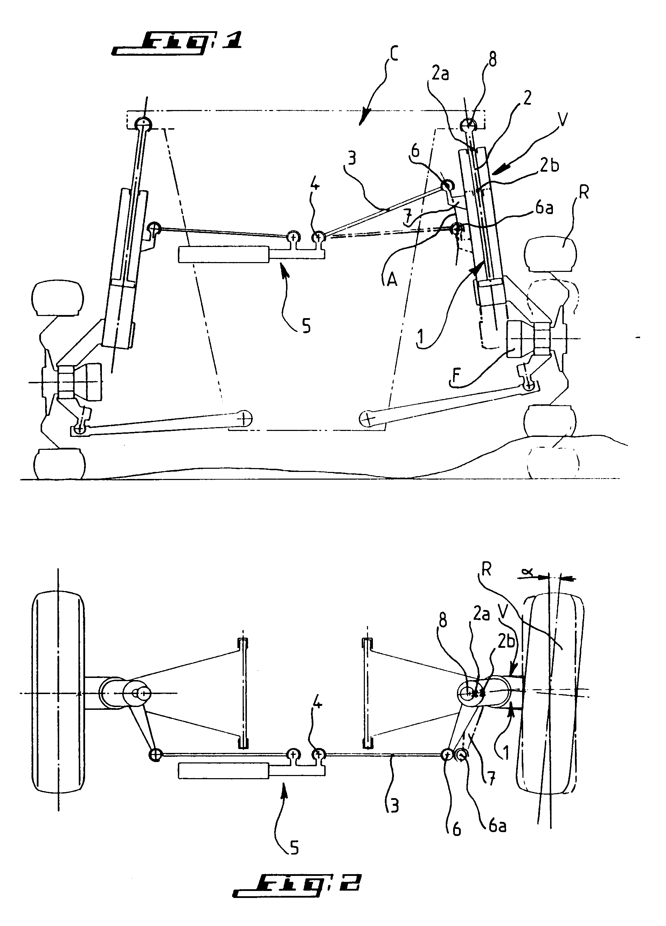

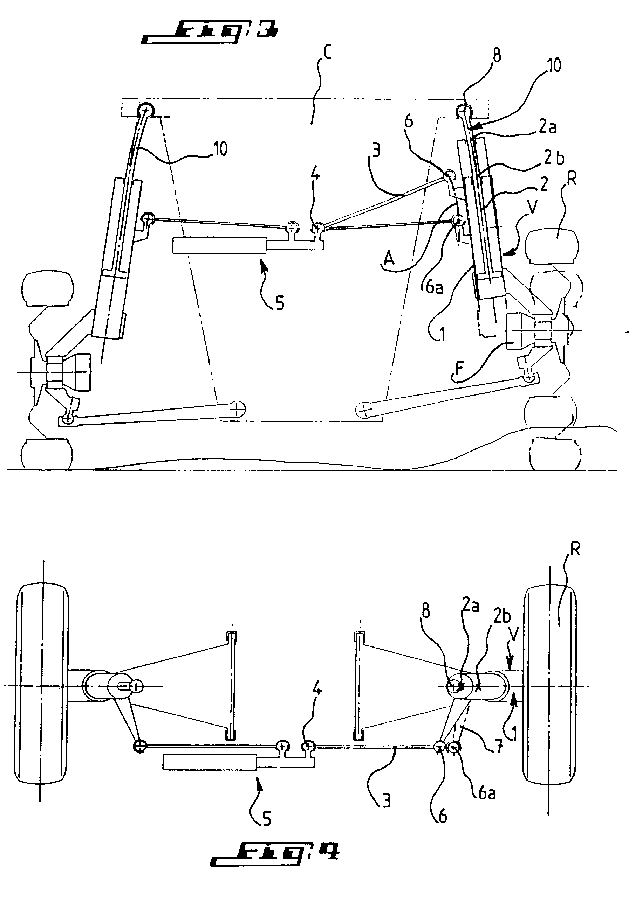

En se reportant aux figures 1 et 2, on voit une suspension du type "Mac Pherson" selon l'art antérieur et qui comprend, si l'on s'en tient à la partie droite de ces deux figures (étant entendu que la partie gauche comporte, d'une façon symétrique, les mêmes éléments), un vérin V disposé sensiblement verticalement et monté entre la caisse C d'un véhicule et une fusée F de roue R.

Plus précisément, le vérin V possède un corps 1 dont la partie inférieure est solidaire de la fusée F de roue R et une tige 2 dont l'extrémité libre 8 est en appui articulé, par l'intermédiaire d'une rotule, sur la caisse C du véhicule. Une biellette de direction 3, attelée par une extrémité 4 à une crémaillère de direction 5, est reliée de façon articulée par son autre extrémité 6 au corps 1 du vérin V, et cela par l'intermédiaire d'un élément, tel que par exemple un levier 7. Ce levier est solidaire du corps 1 du vérin en partie haute de celui-ci, ce qui est par exemple le cas dans certains véhicules de petites dimensions dont le capot est court.

Dans une telle suspension connue, les variations de l'angle de braquage $\alpha$ (voir figure 2) lors du débattement vertical des roues s'expliquent comme suit.

Lors d'un débattement de la roue R vers le haut, comme matérialisé en traits pleins, l'extrémité 6 de la biellette 3 décrit une trajectoire en arc de cercle A, tandis que le corps 1 du vérin V se déplace sensiblement parallèlement à lui-même, suivant une trajectoire sensiblement rectiligne le long de la tige rectiligne 2.

Autrement dit, le point d'articulation 6 passe de la position 6a à la position 6 en suivant une trajectoire sensiblement en arc de cercle, tandis que le point 2a passe de la position 2b à la position 2a en suivant une trajectoire sensiblement rectiligne. Par conséquent, le point 6 se rapproche davantage du plan longitudinal médian du véhicule que le point 2a, et il se produit par conséquent une rotation de l'élément 7 et un braquage parasite de la roue droite suivant un angle α , comme on le voit bien sur la figure 2, étant entendu que ce phénomène peut être plus ou moins marqué selon la géométrie du train.

Ce phénomène est particulièrement marqué lorsque la biellette 3 est articulée sur le corps 1 du verin V en position haute sur ce corps et est relativement proche de l'articulation ou rotule 8.

Conformément à l'invention, et comme on le voit bien en se reportant aux figures 3 et 4, le phénomène ci-dessus est évité par le fait que le corps 1 du vérin V suit un trajet légèrement courbe et dû au fait que la partie supérieure 10 de la tige 2, située du côté de l'articulation ou rotule 8, est cambrée vers l'intérieur du véhicule, et cela dans un plan sensiblement parallèle à un plan perpendiculaire à l'axe longitudinal médian du véhicule et contenant la biellette de direction 3.

Ainsi, comme on le comprend, les points 6 et 2a lors d'un débattement de la roue R vers le haut, passent de leurs positions initiales 6a et 2b aux positions 6 et 2a en suivant tous les deux des trajectoires arquées et sensiblement parallèles.

Autrement dit, grâce à la cambrure de la partie supérieure 10 de la tige 2 du vérin V, la trajectoire du point 2a se rapproche d'un arc de cercle, et ce point se rapproche à peu près autant du centre du véhicule que le point 6, ce qui atténue beaucoup le phénomène de braquage parasite des roues et peut même l'annuler complètement dans certains cas. Ainsi, la similitude des trajectoires effectuées par le point 6 et le point 2a permettra de ne pas induire d'angle parasite α de braquage.

La cambrure de la partie supérieure 10 de la tige 2 sera adaptée de façon à permettre la maîtrise des variations de braquage induites et par conséquent de corriger les instabilités de trajectoire. Cette cambrure sera évidemment fonction des caractéristiques du véhicule et de la correction que l'on veut obtenir.

A cet égard, la cambrure de la partie supérieure 10 de la tige 2 pourra s'étendre à l'extérieur du corps 1 du vérin V lorsque la suspension est à l'équilibre, et même à l'intérieur d'au moins une partie du corps 1 du vérin, si cela est nécessaire dans certains cas.

Bien entendu l'invention n'est nullement limitée au mode de réalisation décrit et illustré qui n'a été donné qu'à titre d'exemple.

C'est ainsi que la longueur de la cambrure réalisée sur la tige 2 du vérin V peut être quelconque.

L'invention comprend tous les équivalents techniques des moyens décrits ainsi que leurs combinaisons si celles-ci entrent dans le cadre des revendications qui suivent.

## Revendications

1. Suspension perfectionnée du type "Mac Pherson" pour roues de véhicule et comprenant au moins un verin (V) disposé sensiblement verticalement, ce verin possédant un corps (1) dont la partie inférieure est solidaire de la fusée (F) de roue (R) et une tige (2) dont l'extrémité supérieure (8) est en appui articulé sur la caisse (C) du véhicule, tandis qu'une biellette de direction (3) est reliée de façon articulée au corps (1) du vérin, caractérisée en ce qu'au moins la partie supérieure (10) de la tige (2) située du côté de son extrémité supérieure (8) articulée sur la caisse (C) du véhicule est cambrée vers l'intérieur du véhicule et se situe dans un plan sensiblement parallèle à un plan perpendiculaire à l'axe longitudinal médian du véhicule et contenant ladite biellette de direction (3).

2. Suspension selon la revendication 1, caractérisée en ce que la partie cambrée (10) de la tige (2) s'étend à l'extérieur du corps du verin (V) et éventuellement à l'intérieur d'au moins une partie du corps du vérin, lorsque la suspension est à l'équilibre.

3. Véhicule automobile équipé d'une suspension suivant la revendication 1 ou 2.

## Patentansprüche

1. Verbesserte Aufhängung der "Mac Pherson" Bauart für Fahrzeugräder, mit wenigstens einem etwa senkrecht angeordneten Kraftzylinder (V), wobei dieser Kraftzylinder einen Körper (1) besitzt, dessen untere Teil mit dem Achsstummel (F) des Rades (R) fest verbunden ist und einer Stange (2), dessen oberes Ende (8) sich gelenkig an dem Kasten (C) des Fahrzeugs abstützt, während eine Lenkschubstange (3) in angelenkter Weise mit dem Körper (1) des Kraftzylinders verbunden ist, dadurch gekennzeichnet, dass wenigstens der im Bereich ihres an dem Kasten (C) des Fahrzeugs angelenkten oberen Endes (8) liegende obere Teil (10) der Stange (2) nach dem Innerin des Fahrzeugs hin gekrümmt ist und in einer Ebene liegt, die etwa parallel zu der senkrecht zu der Mittellängsachse des Fahrzeugs verlaufenden Ebene ist und die besagte Lenkschubstange (3) enthält.

2. Aufhängung nach Anspruch 1, dadurch gekennzeichnet, dass der gekrümmte Teil (10) der Stange (2) sich ausserhalb des Körpers des Kraftzylinders (V) und gegebenenfalls innerhalb von wenigstens einem Teil des Körpers des Kraftzylinders erstreckt, wenn die Aufhängung im Gleichgewicht ist.

3. Mit einer Aufhängung gemäss Anspruch 1 oder 2 ausgestattetes Kraftfahrzeug.

**Claims**

1. Improved suspension of the "Mac Pherson" type for vehicle wheels and comprising at least one substantially vertically disposed jack (V), this jack having a body (1) the lower portion of which is made fast to the stub axle (F) of the wheel (R) and a rod (2) the upper end (8) of which is bearing in pivotally connected relationship on the body (C) of the vehicle whereas a drag link (3) is connected in a pivoted manner to the body (1) of the jack, characterized in that at least the upper portion (10) of the rod (2) located towards its top end (8) pivotally connected onto the body (C) of the vehicle is cambered inwards of the vehicle and is located in a plane substantially parallel to a plane perpendicular to the longitudinal middle axis of the vehicle and containing the said drag link (3).

2. Suspension according to claim 1, characterized in that the cambered portion (10) of the rod (2) extends outside of the body of the jack (V) and possibly inside of at least one portion of the body of the jack when the suspension is in equilibrium.

3. Automotive vehicle fitted with a suspension according to claim 1 or 2.

Fig. 1

Fig. 2

5

Fig. 3

Fig. 4